Europäisches Patentamt

European Patent Office

Office européen des brevets

(19)

(11) Veröffentlichungsnummer: **0 041 120**
**B1**

(12) **EUROPÄISCHE PATENTSCHRIFT**

(45) Veröffentlichungstag der Patentschrift:
04.04.84

(51) Int. Cl.³: **A 01 J 7/00,** G 01 F 15/08

(21) Anmeldenummer: **81102787.9**

(22) Anmeldetag: **11.04.81**

(54) Milchmengenmessgerät und Verfahren zum Messen der von einer Kuh im Zuge des Melkens abgegebenen Gesamtmilchmenge.

(30) Priorität: **28.05.80 DE 3020161**

(43) Veröffentlichungstag der Anmeldung:
**09.12.81 Patentblatt 81/49**

(45) Bekanntmachung des Hinweises auf die Patenterteilung:
**04.04.84 Patentblatt 84/14**

(84) Benannte Vertragsstaaten:
**AT BE CH DE FR GB IT LI NL SE**

(56) Entgegenhaltungen:
**DE - A - 2 002 540**
**DE - A - 2 810 376**
**US - A - 3 919 975**

(73) Patentinhaber: **Westfalia Separator AG,**
**Werner-Habig-Strasse 1 Postfach 3720,**
**D-4740 Oelde 1 (DE)**

(72) Erfinder: **Klestra, Philippus, Pope, Tsjerkebuorren 24,**
**NL-9286 GB Twijzel (NL)**
Erfinder: **Icking, Christian, Paul-Keller-Strasse 1,**
**D-4740 Oelde 1 (DE)**

(74) Vertreter: **Loesenbeck, Karl-Otto, Dipl.-Ing. et al,**
**Jöllenbecker Strasse 164, D-4800 Bielefeld 1 (DE)**

BUNDESDRUCKEREI BERLIN

# Milchmengenmeßgerät und Verfahren zum Messen der von einer Kuh im Zuge des Melkens abgegebenen Gesamtmilchmenge

Die Erfindung bezieht sich auf ein Milchmengenmeßgerät für Melkanlagen zum unmittelbaren Messen der von einer Kuh im Zuge des Melkens abgegebenen Milchmenge, mit einer unterdruckbeaufschlagten Trennkammer zum Abscheiden der Milch aus dem abgemolkenen Milch-Luft-Gemisch, einer unterhalb der Trennkammer angeordneten Meßkammer für die Milch, die an ihrem unteren Ende ein über den Ventilkörper eines steuerbaren Ventils verschließbare Milchauslauföffnung aufweist und der eine Meß- und Kontrollvorrichtung zugeordnet ist, die das Ventil in Abhängigkeit von dem Füllstand in der Meßkammer öffnet oder schließt und die die Gesamtmilchmenge als Summe aus einzelnen, der Meßkammer entnommenen Teilmengen bestimmt, sowie mit einer unterdruckbeaufschlagten Sammelkammer oder einer unterdruckbeaufschlagten Sammelleitung, die unterhalb der Meßkammer angeordnet ist und in die die Milchauslauföffnung mündet.

Die Erfindung betrifft ferner ein Verfahren zum Messen der von einer Kuh im Zuge des Melkens abgegebenen Gesamtmilchmenge.

Es ist ein Milchmengenmeßgerät der eingangs genannten Art bekannt (US-A-3 919 975), bei dem die Trennkammer durch eine mittels eines Ventilkörpers verschließbare Milcheinlauföffnung mit der Meßkammer verbunden ist. Dieser Ventilkörper ist an einer Stellstange befestigt, die am unteren Ende einen weiteren Ventilkörper trägt und über den die im Boden der Meßkammer vorgesehene Milchauslauföffnung verschließbar ist. Sofern der obere Ventilkörper die Milcheinlauföffnung freigibt, verschließt der untere Ventilkörper die Milchauslauföffnung der Meßkammer und umgekehrt.

Bei diesem Milchmengenmeßgerät wird eine Unterdruckleitung von außen an die Trennkammer herangeführt. In diese Unterdruckleitung dringen während des Betriebes Milchdämpfe ein, so daß sie gereinigt werden muß.

Die Trennkammer muß ein großes Volumen aufweisen, damit sie bei geschlossener, zur Meßkammer führenden Öffnung die ermolkene Milchmenge aufnehmen kann. Beim Öffnen der zur Meßkammer führenden Milcheinlauföffnung stürzt die in der Trennkammer gespeicherte, relativ große Milchmenge in die Meßkammer. Hierbei tritt eine das Meßergebnis verfälschende Schaumbildung auf.

Der konstruktive Aufbau des Milchmengenmeßgerätes nach der US-A-3 919 975 findet sich in seinen wesentlichen Merkmalen auch bei dem Milchmengenmeßgerät nach der DE-A-2 810 376.

Der Erfindung liegt die Aufgabe zugrunde, ein Milchmengenmeßgerät der eingangs genannten Art so zu gestalten, daß es geringe Abmaße aufweist, eine außen zur Trennkammer geführte Unterdruckleitung entfällt und das Gerät mit hoher Meßgenauigkeit arbeitet.

Diese Aufgabe wird nach der Erfindung dadurch gelöst, daß die Trennkammer mit der Meßkammer durch eine ständig geöffnete Einströmöffnung verbunden ist, wodurch in beiden Kammern während des gesamten Meßvorgangs der gleiche Druck herrscht, daß die Trennkammer mit der unterdruckbeaufschlagten Sammelkammer oder der unterdruckbeaufschlagten Sammelleitung durch ein Luftführungsrohr verbunden ist und daß die Meß- und Kontrollvorrichtung so ausgelegt ist, daß der Ventilkörper die Milchauslauföffnung stets vor der vollständigen Entleerung der Meßkammer schließt.

Da die Gesamtmilchmenge, die von einer Kuh im Zuge des Melkens abgegeben wird, aus Teilmengenmessungen bei ständigem Milchzufluß zur Meßkammer ermittelt wird, kann die Trennkammer in geringer Bauhöhe und mit kleinen Abmessungen ausgeführt werden. Das abgemolkene Milch-Luft-Gemisch kann dieser Trennkammer tangential zugeführt werden, wobei die Milch den Außenbereich der Trennkammer ausfüllt, während die Luft in den mittleren Bereich der Trennkammer gelangt und von dort aus über ein Luftführungsrohr in eine Sammelkammer oder in eine Sammelleitung strömt. Die Milch fließt von der Trennkammer über eine ständig geöffnete Einströmöffnung in die Meßkammer, in der die gleichen Druckverhältnisse wie in der Trennkammer herrschen.

In der Meßkammer werden Teilmengenmessungen vorgenommen, bis geringe anfallende Milchmengen das Melkende anzeigen. Das Milchmengenmeßgerät wird dann abgeschaltet, und es wird die nächste Milchmengenmessung automatisch vorbereitet, wobei manuelle Betätigungen entfallen. Die Beendigung des Meßvorganges kann benutzt werden, um weitere Arbeitsgänge, z. B. die Melkzeugabnahme, einzuleiten.

Mit dem erfindungsgemäßen Milchmengenmeßgerät können verschiedene Meßverfahren durchgeführt werden, die im folgenden zusammen mit Ausführungsbeispielen des Milchmengenmeßgerätes anhand der Zeichnungen erläutert werden. Es zeigt

Fig. 1 ein Milchmengenmeßgerät im Vertikalschnitt, bei dem unterhalb der Meßkammer eine Sammelkammer vorgesehen ist,

Fig. 2 ein Milchmengenmeßgerät im Schnitt, bei dem der Boden der Meßkammer eine rinnenförmige Nut zur Aufnahme eines Teils der Milchsammelleitung aufweist und

Fig. 3 eine graphische Darstellung.

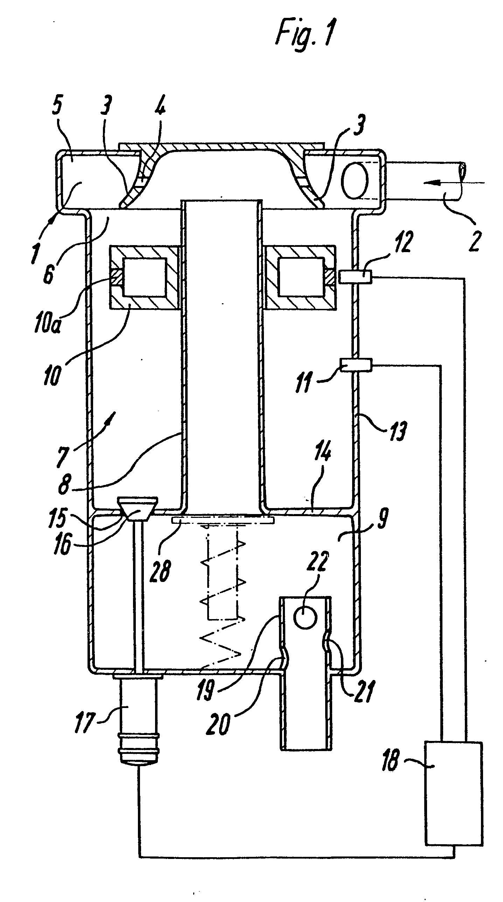

Das in der Fig. 1 dargestellte Milchmengenmeßgerät ist mit einer Trennkammer 1 ausgerüstet, der das abgemolkene Milch-Luft-Gemisch tangential über einen Stutzen 2 zugeführt wird. Die Trennkammer 1 ist mit Leitschaufeln 3 ausgerüstet, die Durchströmbohrungen 4 für die Luft aufweisen, die sich vom Milch-Luft-Gemisch trennt, zumal die Milch den Außenbereich 5 der Trennkammer 1 ausfüllt. Über eine ständig geöffnete Einströmöffnung 6 gelangt die Milch in eine Meßkammer 7, während die Luft über ein Luftführungsrohr 8 in eine Sammelkammer 9 strömt.

Bei dem Ausführungsbeispiel nach der Fig. 1 ist auf dem Luftführungsrohr 8 ein Schwimmer 10 gleitbar gelagert. Dieser Schwimmer, der mit einem Dauermagneten 10a ausgerüstet ist, arbeitet mit zwei Magnetsensoren 11 und 12 zusammen, die in der Wandung 13 der Meßkammer festgelegt sind.

Im Boden 14 der Meßkammer ist eine Milchauslauföffnung 15 vorgesehen, die über einen Ventilkörper 16 verschlossen werden kann. Der Ventilkörper 16 ist Teil eines elektromagnetisch betätigbaren Ventils 17, das über ein elektronisches Gerät 18 elektrisch mit den Magnetsensoren 11, 12 in Verbindung steht. Sofern der Schwimmer mit dem Magnetsensor 12 zusammenwirkt, wird der Ventilkörper 16 in die Offenstellung gefahren. Die Milch fließt dann aus der Meßkammer 7 in die Sammelkammer 9, in die ein Abflußstutzen 19 ragt, der mit der Milchleitung verbunden ist und in der Höhe versetzte Abflußöffnungen 20, 21, 22 aufweisen kann.

Das Volumen $V_1$ der Meßkammer zwischen den Magnetsensoren 11, 12 ist kleiner als das Volumen $V_2$ der Sammelkammer 9.

Sofern im Zuge des Ausfließens der Milch aus der Meßkammer der Schwimmer 10 so weit abgesenkt wurde, daß sein Magnet 10a mit dem Magnetsensor 11 zusammenwirkt, wird das Ventil 17 in die Verschlußstellung bewegt.

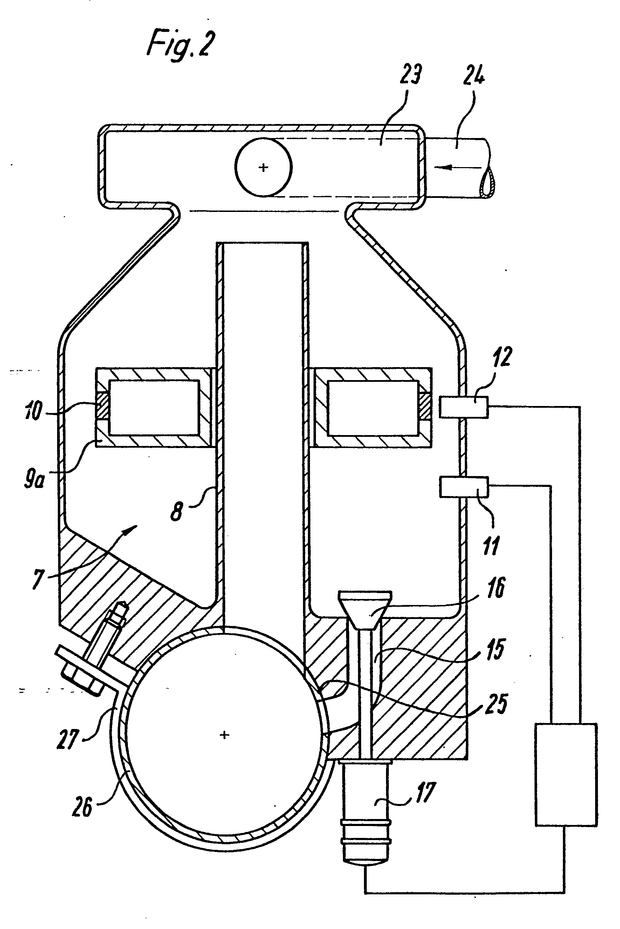

Bei dem Ausführungsbeispiel nach der Fig. 2 weicht der konstruktive Aufbau der Trennkammer 23, der das abgemolkene Milch-Luft-Gemisch z. B. tangential über den Stutzen 24 zugeführt wird, konstruktiv ein wenig von der Trennkammer 1 ab, zumal die Anordnung von Leitschaufeln entfällt. Der Boden der Meßkammer 7 ist mit einer rinnenförmigen Nut 25 zur Aufnahme eines Teils der Sammelleitung 26 für die Milch ausgerüstet. In die Sammelleitung 26 mündet das Luftführungsrohr 8 ein. Das Milchmengenmeßgerät ist über eine Schelle 27 an der Sammelleitung 26 befestigt.

Die Steuerung des Ventils 17 wird über die Füllstandshöhe vorgenommen. Sie kann mit anderen Mitteln durchgeführt werden als mit den beschriebenen Mitteln und magnetisch, mechanisch, pneumatisch o. dgl. gestaltet sein.

Zur Durchführung eines erfindungsgemäßen Verfahrens zum Messen der von einer Kuh im Zuge des Melkens abgegebenen Gesamtmilchmenge wird die Milchauslauföffnung 15 als kalibrierte Öffnung gestaltet. Das Ventil 17 öffnet die Milchauslauföffnung 15, wenn die Füllstandshöhe der Milch in der Meßkammer den oberen Magnetsensor 12 erreicht hat. Die Milchauslauföffnung wird über den Ventilkörper 16 geschlossen, wenn die Füllstandshöhe der Milch den unteren Magnetsensor 11 erreicht.

Bezeichnet man die Querschnittsfläche der kalibrierten Milchauslauföffnung 15 mit A, mit $\mu$ den konstanten Ausflußfaktor dieser Milchausflußöffnung, die mittlere Füllstandshöhe der Milch in der Meßkammer 7 mit h und die pro Schaltung aus der Öffnung 15 auslaufende Milchmenge mit $Q_i$, die Auslaufzeit pro Ventilschaltung mit $t_i$ und die Gesamtmilchmenge mit $Q_{ges}$, so ergibt sich folgendes Gleichungssystem:

$$Q_i = A \times \mu \times \sqrt{2\,gh} \times t_i,$$

$$Q_{ges} = A \times \mu \times \sqrt{2\,gh} \times t_{ges},$$

$$t_{ges} = \sum_{i=1}^{n} t_i.$$

Zur Ermittlung der Gesamtmilchmenge werden also die einzelnen Öffnungszeiten des Ventils 17 addiert.

Zu dem ermittelten Wert der Milchmenge muß noch die Milchmenge hinzugezählt werden, die in der Meßkammer unterhalb des Magnetsektors 11 vorhanden ist.

Die Gesamtmilchmenge kann durch ein elektronisches Gerät verarbeitet und angegeben werden.

Bei dem zweiten erfindungsgemäßen Meßverfahren ist ebenfalls die Milchauslauföffnung 15 als kalibrierte Öffnung ausgebildet. Bei diesem Verfahren wird nur der obere Magnetsensor 12 benötigt. Erreicht die Füllstandshöhe der Milch in der Meßkammer 7 den oberen Magnetsensor 12, so öffnet das Ventil 17 die Milchauslauföffnung 15. Das Ventil 17 verschließt die Milchauslauföffnung nach einer fest eingestellten Zeit.

Bezeichnet man die pro Schaltung aus der Meßkammer ausfließende Milchmenge mit $Q_t$ und die konstante Öffnungszeit des Ventils 17 mit t und die gesamte Milchmenge mit Q, so ergibt sich folgendes Gleichungssystem:

$$Q_t = A \times \mu \times \sqrt{2\,gh} \times t,$$

$$Q_t = \text{konstant},$$

$$Q = Q_t \times n \quad (n = \text{Zahl der Schaltungen}).$$

Es wird die Anzahl der Öffnungen des Auslaßventils addiert.

Bei diesem Meßverfahren sollte die konstante Ablaufzeit möglichst klein gewählt werden, oder es müßte eine Kompensation für die nicht mehr konstante Ausflußhöhe vorgesehen werden, z. B. mit einer elektronischen Schaltung.

Bei einem weiteren Meßverfahren braucht die Milchauslauföffnung 15 nicht als kalibrierte Öffnung ausgebildet zu sein.

Beim Auffüllen der Meßkammer bei geschlossenem Ventil 17 wird mit Hilfe der beiden Magnetsensoren 11, 12 o. dgl. die Zeit $c_i$ gemessen, die der Schwimmer 10 benötigt, um vom unteren zum oberen Magnetsensor zu gelangen. In dieser Zeit wird in die Meßkammer das Volumen V gefüllt. Nach Erreichen des oberen Meßpunktes wird über das Ventil 17 die Milchauslauföffnung 15 geöffnet, bis der Schwimmer in der Zeit $d_1$ bis zum unteren Meßpunkt gefallen ist. Dort wird das Ventil geschlossen, und der Schwimmer steigt wieder.

$$Q_i = \frac{V}{c_i}$$

ist der mittlere Zufluß während der Zeit $c_i$.
Annahme:

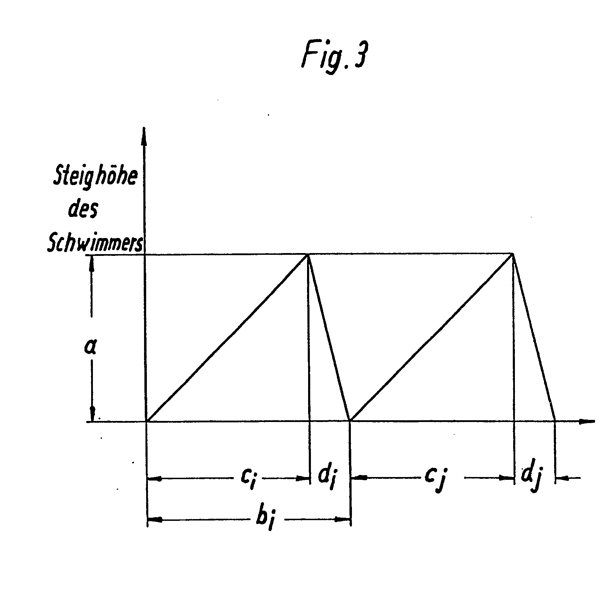

Der Zufluß bleibt während der Zeit $d_i$ konstant $Q_i$, dann beträgt das während $b_i = c_i + d_i$ (Fig. 3) zugeflossene Volumen

$$V_i = Q_i \times b_i = \frac{b_i}{c_i} \times V.$$

Bei n Messungen erhält man als Gesamtvolumen

$$Q_{ges} = \sum_{i=1}^{n} V_i = V \times \sum_{i=1}^{n} \frac{b_i}{c_i}.$$

Der bei der Annahme gemachte Fehler ist gering, wenn der Ausfluß groß ist, was z. B. durch eine große Auslauföffnung oder auch dadurch erreicht wird, daß ein Druckunterschied zwischen der Meßkammer und der Sammelkammer oder der Sammelleitung erzeugt wird. Dieser Druckunterschied kann z. B. durch ein Ventil 28 im Bereich des Luftführungsrohres 8 erzeugt werden. Das Ventil 28 ist in der Fig. 1 in strichpunktierten Linien dargestellt.

Bei diesem Meßverfahren kommt es nicht darauf an, daß der Ausfluß immer konstant ist, so daß die Gestaltung der Milchauslauföffnung 15 konstruktiv weitgehend frei ist.

Bei diesem Meßverfahren kann das Gerät in besonders kleinen Abmessungen ausgeführt werden, da die Meßgenauigkeit unabhängig von der Füllhöhe ist.

**Patentansprüche**

1. Milchmengenmeßgerät für Melkanlagen zum unmittelbaren Messen der von einer Kuh im Zuge des Melkens abgegebenen Milchmenge, mit einer unterdruckbeaufschlagten Trennkammer (1, 23) zum Abscheiden der Milch aus dem abgemolkenen Milch-Luft-Gemisch, einer unterhalb der Trennkammer angeordneten Meßkammer (7) für die Milch, die an ihrem unteren Ende ein über den Ventilkörper (16) eines steuerbaren Ventils (17) verschließbare Milchauslauföffnung (15) aufweist und der eine Meß- und Kontrollvorrichtung zugeordnet ist, die das Ventil (17) in Abhängigkeit von dem Füllstand in der Meßkammer (7) öffnet oder schließt und die die Gesamtmilchmenge als Summe aus einzelnen, der Meßkammer (7) entnommenen Teilmengen bestimmt, sowie mit einer unterdruckbeaufschlagten Sammelkammer (9) oder einer unterdruckbeaufschlagten Sammelleitung (26), die unterhalb der Meßkammer (7) angeordnet ist und in die die Milchauslauföffnung (15) mündet, dadurch gekennzeichnet, daß die Trennkammer (1, 23) mit der Meßkammer (7) durch eine ständig geöffnete Einströmöffnung (6) verbunden ist, wodurch in beiden Kammern während des gesamten Meßvorgangs der gleiche Druck herrscht, daß die Trennkammer (1, 23) mit der unterdruckbeaufschlagten Sammelkammer (9) oder der unterdruckbeaufschlagten Sammelleitung (26) durch ein Luftführungsrohr (8) verbunden ist und daß die Meß- und Kontrollvorrichtung so ausgelegt ist, daß der Ventilkörper (16) die Milchauslauföffnung (15) stets vor der vollständigen Entleerung der Meßkammer schließt.

2. Milchmengenmeßgerät nach Anspruch 1, dadurch gekennzeichnet, daß das Luftführungsrohr (8) die Meßkammer (7) mittig durchsetzt und daß auf dem Luftführungsrohr (8) gleitbar ein Schwimmer (10) gelagert ist, der mit mindestens einem in der Wandung (13) der Meßkammer (7) festgelegten Magnetsensor (11, 12) zusammenwirkt.

3. Milchmengenmeßgerät nach Anspruch 1 oder 2, dadurch gekennzeichnet, daß die Trennkammer (1) einen mit Durchströmbohrungen (4) für die Luft versehenen Leitring (3) aufweist, der die Einströmöffnung zwischen der Trennkammer und der Meßkammer nach innen begrenzt.

4. Milchmengenmeßgerät nach einem der Ansprüche 1 bis 3, dadurch gekennzeichnet, daß in die unterhalb der Meßkammer (7) vorgesehene Sammelkammer (9) ein Abflußstutzen (19) ragt, der mit in der Höhe versetzten Abflußöffnungen (20, 21, 22) versehen ist.

5. Milchmengenmeßgerät nach einem der Ansprüche 1 bis 4, dadurch gekennzeichnet, daß in der Wandung (13) der Meßkammer (7) zwei im Abstand voneinander übereinanderliegende Magnetsensoren (11, 12) vorgesehen sind und das Volumen (V1) der Meßkammer zwischen diesen Magnetsensoren kleiner ist als das Volumen (V2) der Sammelkammer (9).

6. Milchmengenmeßgerät nach Anspruch 1, dadurch gekennzeichnet, daß der Boden der Meßkammer eine rinnenförmige Nut (25) zur Aufnahme eines Teils der Sammelleitung (26) für die Milch aufweist und in die Sammelleitung das Luftführungsrohr (8) einmündet.

7. Milchmengenmeßgerät nach Anspruch 1, dadurch gekennzeichnet, daß ein Druckunterschied zwischen der Meßkammer (7) und der Sammelkammer (9) oder der Sammelleitung (26) durch ein Ventil (28) im Bereich des Luftführungsrohres (8) erzeugt wird.

8. Verfahren zum Messen der von einer Kuh im Zuge des Melkens abgegebenen Gesamtmilchmenge unter Verwendung eines Milchmengenmeßgerätes nach Anspruch 1, dadurch gekennzeichnet, daß die Milchauslauföffnung (15) kalibriert ausgelegt wird, daß das Ventil (17) jeweils geöffnet wird, wenn der Milchspiegel in der Meßkammer (7) ein durch einen ersten Meßpunkt bestimmtes oberes Niveau erreicht, und geschlossen wird, wenn der Milchspiegel ein durch einen zweiten Meßpunkt bestimmtes unteres Niveau erreicht, und daß die Gesamtmilchmenge durch die Summe der Öffnungszeiten des Ventils (17) ermittelt wird.

9. Verfahren zum Messen der von einer Kuh im Zuge des Melkens abgegebenen Gesamtmilchmenge unter Verwendung eines Milchmengenmeßgeräts nach Anspruch 1, dadurch gekennzeichnet, daß die Milchauslauföffnung (15) kalibriert ausgelegt wird, daß das Ventil (17) jeweils für eine vorbestimmte Zeitdauer, die kürzer ist als die zur vollständigen Entleerung der Meßkammer (7) benötigte, geöffnet wird, wenn der Milchspiegel in der Meßkammer (7) ein durch einen Meßpunkt bestimmtes Niveau erreicht, und daß die Gesamtmilchmenge aus der Anzahl der Öffnungszyklen ermittelt wird.

10. Verfahren zum Messen der von einer Kuh im Zuge des Melkens abgegebenen Gesamtmilchmenge unter Verwendung eines Milchmengenmeßgerätes nach Anspruch 1, dadurch gekennzeichnet, daß die Gesamtmilchmenge durch die Summierung aufeinanderfolgender Einzelmengenmessungen in der Weise erfolgt, daß durch die Messung der Auffüllzeit eines durch ein Auslaßventil auf ein unteres Niveau abgesenkten Volumens die momentane Milchmengenleistung bestimmt, die mittlere Zuflußmenge während der Auffüllzeit errechnet, die Ablaufzeit bei nachfolgend geöffnetem Auslaßventil gemessen und die in der Summe der Auffüllzeit und der Ablaufzeit ermolkene Milchmenge errechnet wird.

11. Verfahren nach einem der Ansprüche 8 bis 10, dadurch gekennzeichnet, daß beim Erreichen einer limitierten Auffüllzeitvorgabe der Meßvorgang beendet, die nächste Milchmengenmessung automatisch vorbereitet wird und weitere Arbeitsgänge, z. B. die Melkzeugabnahme, eingeleitet werden.

## Claims

1. Milkmeter for measuring directly the quantity of milk issued by a cow during milking, comprising a separation chamber (1, 23) under vacuum for separating the milk from the obtained milk-air mixture, a measuring chamber (7) for the milk, situated beneath the said separation chamber and provided at its lower end with a milk outlet (15) closable via the valve body (16) of a controllable valve (17) and associated with a measuring and control unit which opens and closes respectively the said valve depending on the level in the said measuring chamber and which determines the total milk quantity by adding together the individual partial quantities released from the said measuring chamber (7), as well as a collecting chamber (9) or collecting line (26) under vacuum, located beneath said measuring chamber (7) and to which the said milk outlet (15) is joined, characterised in that said separation chamber (1, 23) is connected with said measuring chamber (7) through a constantly open inlet (6), whereby equal pressure prevails in both chambers throughout the measuring process, and in that said separation chamber (1, 23) is connected to said collecting chamber (9) or said collecting line (26) under vacuum through an air duct (8) and in that the measuring and control unit is designed such that said valve body (16) always closes milk outlet (15) before said measuring chamber is completely emptied.

2. Milkmeter according to claim 1, characterised in that the air duct (8) is centrally arranged in the measuring chamber (7) and in that said air duct serves as a guide for a freely moving float (10) which cooperates with at least one magnetic sensor (11, 12) fixed to the side wall (13) of said measuring chamber (7).

3. Milkmeter according to claims 1 or 2, characterised in that the separation chamber (1) is provided with a guide ring (3) which in turn is provided with air flow holes (4) and which serves to restrict the inlet between said separation chamber and the measuring chamber towards the centre.

4. Milkmeter according to one of the preceding claims, characterised in that a discharge connection (19) protrudes through the bottom of the collecting chamber (9) situated beneath the measuring chamber (7), which is provided with discharge holes (20, 21, 22) staggered along its length.

5. Milkmeter according to one of the claims 1 to 4, characterised in that two magnetic sensors (11, 12) are arranged above and at a certain distance from each other on the side wall (13) of the measuring chamber (7) and in that the volume (V1) of said measuring chamber between these magnetic sensors is smaller than the volume (V2) of the collecting chamber (9).

6. Milkmeter according to claim 1, characterised in that the bottom of the measuring chamber is provided with a circular groove for holding a part of the collecting line (26) for the milk and in that the air duct (8) discharges into the said collecting line.

7. Milkmeter according to claim 1, characterised in that a pressure difference is produced between the measuring chamber (7) and the collecting chamber (9) or the collecting line (26) by means of a valve (28) in the area of the air duct (8).

8. A method for measuring the total quantity of milk produced by one cow during milking, using a milkmeter according to claim 1, characterised in that the milk outlet (15) is calibrated, in that the valve (17) is opened when the milk level in the measuring chamber (7) reaches an upper limit as defined by a first measuring point and closed when the milk level drops to a lower limit as defined by a second measuring point and in that the total quantity of milk is calculated by adding together the opening times of said valve (17).

9. A method for measuring the total quantity of milk produced by one cow during milking, using a milkmeter according to claim 1, characterised in that the milk outlet (15) is calibrated, in that the valve (17) is opened for a pre-set time which is shorter than that needed to completely empty the measuring chamber (7) when the milk in said measuring chamber (7) reaches a pre-set level defined by a measuring point and in that the total quantity of milk is calculated on the basis of the number of opening cycles.

10. A method for measuring the total quantity of milk produced by one cow during milking, using a milkmeter according to claim 1, characterised in that the total milk volume is determined by adding together the individually recorded quantities in such a way that, by measuring the time needed for the milk to fill up the measuring chamber after the latter has been emptied through a discharge valve, the momentary milk volume is determined, the average feed rate during the filling time calculated, the milk discharge time with open discharge valve measured and the milk volume determined which is obtained during the sum of the filling and discharge times.

11. A method according to one of the claims 8 to 10, characterised in that the measuring process stops once a pre-set time limit for the filling process has been reached, followed immediately by preparation for the next measuring cycle and the initiation of further work cycles, e.g. cluster removal.

**Revendications**

1. Appareil de mesure des quantités de lait pour installations de traite, pour la mesure directe de la quantité de lait donnée par une vache au cours de la traite, comprenant une chambre de séparation (1, 23) soumise à une dépression, servant à séparer le lait du mélange lait-air tiré, une chambre de mesure du lait, disposée au-dessous de la chambre de séparation, qui présente à son extrémité inférieure, une ouverture (15) de sortie du lait qui peut être obturée au moyen de l'élément mobile (16) d'une soupape (17) pouvant être commandée, et à laquelle est associé un dispositif de mesure et de contrôle qui ouvre ou ferme la soupape (17) en fonction de l'état de remplissage de la chambre de mesure (7) et détermine la quantité totale de lait sous la forme de la somme de quantités partielles distinctes prises dans la chambre de mesure (7), ainsi qu'une chambre collectrice (9) soumise à une dépression, ou une conduite collectrice (26) soumise à une dépression, qui est disposée au-dessous de la chambre de mesure (7) et dans laquelle débouche l'ouverture (15) de sortie du lait, caractérisé en ce que la chambre de séparation (1, 23) est reliée à la chambre de mesure (7) par une ouverture d'entrée (6) ouverte en permanence, de sorte que la même pression règne dans les deux chambres pendant toute l'opération de mesure, en ce que la chambre de séparation (1, 23) est reliée à la chambre collectrice (9) soumise à une dépression ou à la conduite collectrice (26) soumise à une dépression par un tube de passage d'air (8) et en ce que le dispositif de mesure et de contrôle est agencé de manière que l'élément mobile (16) de la soupape ferme toujours l'ouverture (15) de sortie du lait avant la vidange totale de la chambre de mesure.

2. Appareil de mesure de quantités de lait selon la revendication 1, caractérisé en ce que le tube de passage d'air (8) traverse la chambre de mesure (7) en position centrale et en ce que, sur le tube de passage de l'air (8), est monté coulissant un flotteur (10) qui coopère avec au moins un détecteur magnétique (11, 12) monté fixe dans la poroi (13) de la chambre de mesure (7).

3. Appareil de mesure des quantités de lait selon l'une des revendications 1 ou 2, caractérisé en ce que la chambre de séparation (1) présente une couronne directrice (3) munie de trous de passage traversants (4) pour la circulation de l'air et qui limite à l'intérieur l'ouverture d'entrée reliant la chambre de séparation à la chambre de mesure.

4. Appareil de mesure des quantités de lait selon l'une des revendications 1 à 3, caractérisé en ce que, dans la chambre collectrice (9) prévue au-dessous de la chambre de mesure (7), fait saillie une tubulure d'écoulement (19) qui est munie d'ouvertures d'écoulement (20, 21, 22) décalées en hauteur.

5. Appareil de mesure des quantités de lait selon l'une des revendications 1 à 4, caractérisé en ce que, dans la paroi (13) de la chambre de mesure (7) sont prévus deux détecteurs magnétiques (11, 12) disposés l'un au-dessus de l'autre à une certaine distance l'un de l'autre, et en ce que le volume (V1) de la chambre de mesure compris entre ces deux détecteurs magnétiques est plus petit que le volume (V2) de la chambre collectrice (9).

6. Appareil de mesure des quantités de lait selon la revendication 1, caractérisé en ce que le fond de la chambre de mesure présente une gorge (25) en forme de rigole, destinée à recevoir une partie de la conduite collectrice (26) prévue pour le lait et en ce que le tube de passage d'air (8) débouche dans la conduite collectrice.

7. Appareil de mesure des quantités de lait selon la revendication 1, caractérisé en ce qu'une différence de pression entre la chambre de mesure (7) et la chambre collectrice (9) ou la conduite collectrice (26) est produite dans la région du tube de passage d'air (8) au moyen d'une soupape (28).

8. Procédé pour mesurer la quantité totale de lait donnée par une vache au cours de la traite à l'aide d'un appareil de mesure des quantités de lait selon la revendication 1, caractérisé en ce que l'ouverture de sortie du lait (15) est calibrée, que la soupape (17) s'ouvre chaque fois que dans la chambre de mesure (7) la surface libre du lait atteint un niveau supérieur déterminé par un premier point de mesure et qu'elle se ferme lorsque la surface libre du lait atteint un niveau inférieur déterminé par un deuxième point de mesure et en ce que la quantité totale de lait est calculée par la somme des temps d'ouverture de la soupape (17).

9. Procédé pour mesurer la quantité totale de lait donnée par une vache au cours de la traite à l'aide d'un appareil de mesure des quantités de lait selon la revendication 1, caractérisé en ce que l'ouverture de sortie du lait (15) est calibrée, en ce que la soupape (17) s'ouvre chaque fois pour une durée prédéterminée qui est plus courte que la durée nécessaire pour la vidange totale de la chambre de mesure (7), lorsque, dans la chambre de mesure (7), la surface libre du lait atteint un niveau déterminé par un point de mesure et en ce que la quantité totale de lait est calculée sur la base du nombre de cycles d'ouverture.

10. Procédé pour mesurer la quantité totale de lait donnée par une vache au cours de la traite à l'aide d'un appareil de mesure des quantités de lait selon la revendication 1, caractérisé en ce que la quantité totale de lait est donnée par la sommation de mesures de quantités élémentaires successives, en ce que, par la mesure du temps de remplissage d'un volume qui a été abaissé à un niveau inférieur par une soupape de sortie, on détermine le débit de lait instantané, on calcule la quantité d'arrivée moyenne pendant le temps de remplissage, on mesure le temps d'écoulement pour la soupape de sortie ouverte ensuite, et on calcule la quantité de lait tirée pendant la somme du temps de remplissage et du temps d'écoulement.

11. Procédé selon l'une quelconque des revendications 8 à 10, caractérisé en ce que, lorsqu'on atteint une donnée spécifiée de temps de remplissage limitée, l'opération de mesure s'interrompt, la mesure suivante de quantité de lait se prépare automatiquement et des phases de travail ultérieures, par exemple l'enlèvement de la machine à traire, se déclenchent.

Fig. 1

*Fig.2*

# Fig.3